# EUROPÄISCHE PATENTSCHRIFT

(11) **EP 1 470 169 B1**
(45) Veröffentlichungstag und Bekanntmachung des Hinweises auf die Patenterteilung: **26.04.2006**
(21) Anmeldenummer: 03702440.3
(22) Anmeldetag: 15.01.2003
(51) Int. Cl.: C08F 220/14

(54) **VERFAHREN ZUR HERSTELLUNG EINES SCHLAGZÄHEN POLYMETHYLMETHACRYLATS UND SCHLAGZÄHES POLYMETHYLMETHACRYLAT (PMMA)**
METHOD FOR PRODUCING AN IMPACT-RESISTANT POLYMETHYLMETHACRYLATE, AND CORRESPONDING POLYMETHYLMETHACRYLATE (PMMA)
PROCEDE DE PRODUCTION DE POLYMETHYLMETHACRYLATE RESILIENT ET POLYMETHYLMETHACRYLATE (PMMA) RESILIENT CORRESPONDANT

(30) Priorität: 29.01.2002 DE 10203565
(43) Veröffentlichungstag der Anmeldung: 27.10.2004
(73) Patentinhaber: Röhm GmbH & Co. KG, 64293 Darmstadt (DE)
(72) Erfinder: KABS, Klaus, 64319 Pfungstadt (DE); MÜCK, Oliver, 65462 Ginsheim-Gustavsburg (DE)
(86) Internationale Anmeldenummer: PCT/EP2003/000336
(87) Internationale Veröffentlichungsnummer: WO 2003/064485

(56) Entgegenhaltungen:
- DATABASE WPI Section Ch, Week 199115 Derwent Publications Ltd., London, GB; Class A14, AN 1991-105922 XP002243582 & JP 03 047856 A (KURARAY CO. LTD.), 28. Februar 1991 (1991-02-28) in der Anmeldung erwähnt

## Beschreibung

### Gebiet der Erfindung

Die Erfindung betrifft schlagzähes Polymethylmethacrylat (PMMA) und ein Verfahren zur Herstellung des Polymethylmethacrylats sowie aus dem schlagzähen PMMA herstellbare Gegenstände.

### Stand der Technik

Schlagzähe PLEXIGLAS®-Formmassen sind bekannt und werden von der Röhm GmbH & Co. KG beispielsweise unter den Typbezeichnungen PLEXIGLAS®zkBR, PLEXIGLAS®zkHC, PLEXIGLAS®zkHT, PLEXIGLAS®zkHF und PLEXIGLAS®zk in den Handel gebracht.

Die schlagzähen Formmassen werden beispielsweise für Haushaltsgegenstände, Leuchtenabdeckungen, Sanitärartikel, Überdachungsmaterial und zur Oberflächenveredelung von Kunststoffen durch Coextrusion eingesetzt. Über die weiteren Eigenschaften, wie beispielsweise Vicat-Erweichungstemperatur (B/50) (ISO 306), Schlag- und Kaltschlagzähigkeit nach Charpy (ISO 179) gibt der Prospekt "Schlagzähe PLEXIGLAS®-Formmassen" der Röhm GmbH & Co. KG (Nr. 10/1001/06003 (d)) Auskunft.

PLEXIGLAS®GS wird durch Polymerisation von Methylmethacrylat und gegebenenfalls weiteren Monomeren und Hilfsstoffen im Kammerverfahren (Gussverfahren) gewonnen. Es stellt ein hochmolekulares Produkt im Vergleich zu PLEXIGLAS®XT dar und ist daher nicht durch Extrusion oder Spritzguss weiterverarbeitbar. Die Umformung erfolgt entweder durch spannende Bearbeitung oder durch Warmumformen.

Ähnliche Qualitäten werden auch von anderen Herstellern geliefert. Die folgende Tabelle stellt die Eigenschaften von PLEXIGLAS®GS und PLEXIGLAS®XT einander gegenüber:

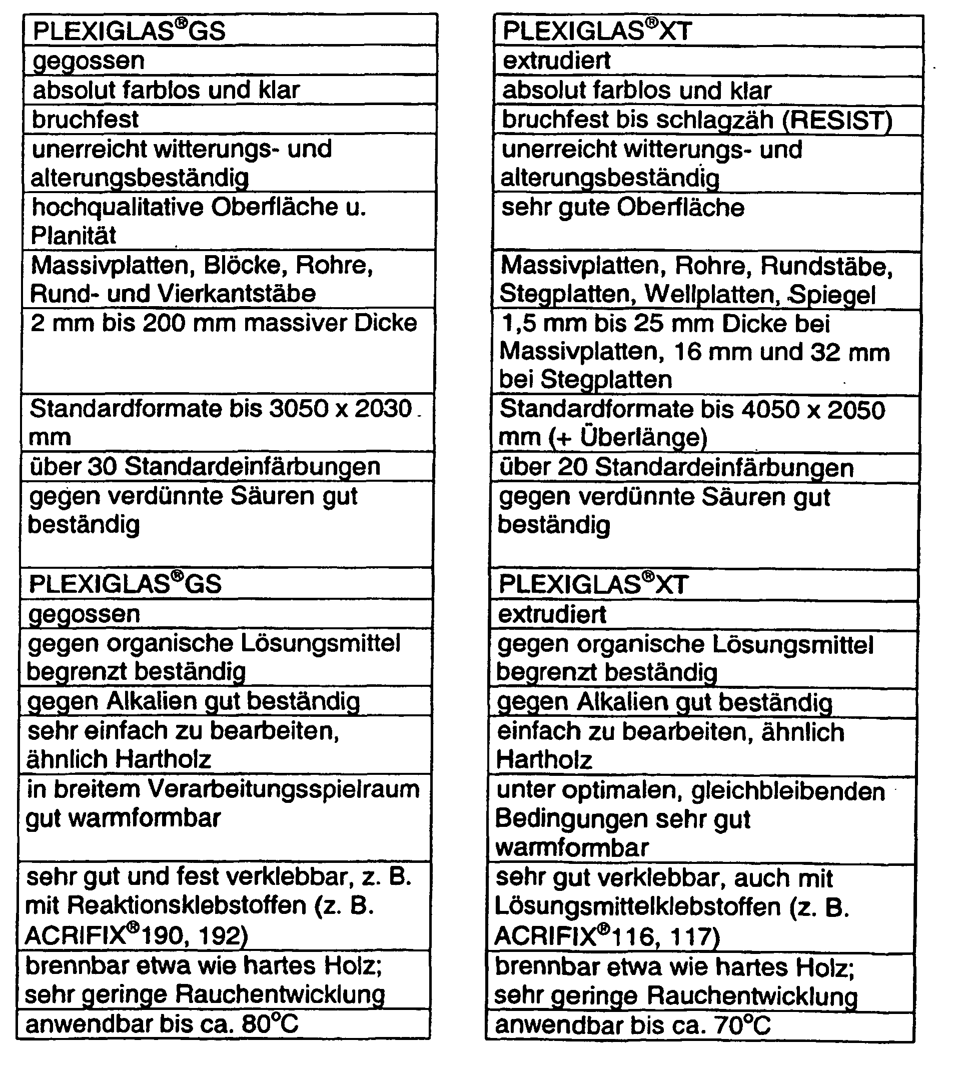

Es hat nicht an Versuchen gefehlt, die schlagzähen Eigenschaften auch bei gegossenen Materialien zu realisieren.

DE 1 964 913 beschreibt witterungsbeständige, hochschlagfeste Harze aus Styrol oder Methylmethacrylat in Gegenwart eines kautschukartigen Mischpolymers aus α-Olefinen und eines Copolymers auf Basis der Monomere Buten, Isobutylen oder flüssigem Paraffin. Das Harz enthält mindestens 50 Gew.-% Styrol.

EP 325 875 (Norsolor) beschreibt ein Harz aus einem interpenetrierenden Netzwerk auf Polysiloxan und Polyacrylat. Der entstandene Kunststoffformkörper kann zu vielfältigen Artikeln weiterverarbeitet werden. Die Lichtdurchlässigkeit der erhaltenen Gegenstände ist nicht allzu hoch.

EP 447 309 (Atochem) offenbart ein Mischpolymerisat auf Polymethylmethacrylat und Polyurethan. Vicat-Temperaturen von bis zu 107° C und Schlagzähigkeitswert (Charpy) von 39 kJ/m² werden gemessen.

US-PS 5,084,495 löst das Problem, wie man schlagzähmodifizierende Teilchen, die durch einen Suspensionspolymerisationsprozess (wässrig) gewonnen werden, in eine Methylmethacrylat-Matrix eingearbeitet werden, bevor polymerisiert wird. Es wird die vollständige wässrige Dispersion des Schlagzähmodifiers mit Methylmethacrylat (MMA) gemischt, das Wasser abgetrennt und übrig bleibt der organische Teil des Schlagzähmodifiers im MMA. Der Prozess ist umständlich, erfordert Hilfsmittel zum Brechen der Dispersion der Schlagzähmodifiers und einen besonderen Apparat zur Phasentrennung.

### Aufgabe

Es bestand die Aufgabe, ein Verfahren zur Herstellung eines Formkörpers (PMMA) zu finden, das ohne interpenetrierende Netzwerke, Polyurethancopolymere oder umständliche Isolierungsschritte des Schlagzähmodifiers auskommt. Ferner ist es vorteilhaft, wenn die Produktion der neuen Formkörper auf der bereits vorhandenen Maschinenausstattung ohne größere Umbauten erfolgen kann.

### Lösung

Es wurde gefunden, dass ein schlagzäher Kunststoffformkörper dadurch erhältlich ist, dass man Schlagzähmodifier oder schlagzähmodifierhaltiges PMMA in MMA oder an polymerisiertem MMA (Sirup) löst und die Lösung anschließend in eine Kammer gießt und nach dem an sich bekannten Verfahren polymerisiert.

Man erhält einen gegossenen Kunststoffformkörper mit den Eigenschaften eines an sich bekannten PLEXIGLAS®GS-Formkörpers mit erhöhter Schlagzähigkeit. Die anderen positiven Eigenschaften, wie Witterungs- und Alterungsbeständigkeit, Beständigkeit gegen Chemikalien und heißes Wasser, optische Brillanz und gute Umformbarkeit, bleiben bestehen.

Als Matrixmaterial kann eine Rezeptur verwendet werden, die die üblichen Stabilisatoren und weitere Zusatzstoffe enthält.

Beispielrezeptur für das Matrixmaterial:

| | |
|---|---|
| 98 - 99 Gew.-% | Methylmethacrylat |
| 0 - 0,3 Gew.% | einer ungesättigten Carbonsäure |
| 0 - 1 Gew.-% | Vernetzer |
| 0,5 - 1 Gew.-% | Stabilisatoren |
| 0 - 0,01 Gew.% | Regler |
| 0 - 0,01 Gew.-% | Initiator |
| 0,01 - 1,0 Gew.-% | Trennmittel |

Als Vernetzer können beispielsweise Glycoldimethacrylat, und Triallylcyanurat verwendet werden.

Als Stabilisatoren können beispielsweise Benztriazole, HALS Produkte oder sterisch gehinderte Phenole oder Mischungen aus den vorstehend genannten Komponenten verwendet werden. Unter HALS-Verbindungen werden sterisch gehinderte Amine verstanden, wie sie beispeilsweise in der JP 0347856 beschrieben sind. Diese "hindered amine light stabilizers" fangen die Radikale ab, die sich bei Strahlenbelastung bilden.

Als Regler werden beispielsweise γ-Terpinen und Terpinolen verwendet.

Als Initiatoren können alle handelsüblichen Radikalstarter eingesetzt werden, wie beispielsweise 2.2'Azobis-(isobutyronitril).

Als ungesättigte Carbonsäure kann beispielsweise Methacrylsäure oder Acrylsäure eingesetzt werden.

Als Schlagzähmodifier kann ein Kern-Schale oder eine Kern-Schale I-Schale II-Schlagzähmodifier eingesetzt werden.

Ein Kern-Schale I-Schale II-Schlagzähmodifier hat beispielsweise folgende Zusammensetzung:

| | | |
|---|---|---|
| Kern: | 94 - 97 Gew.-% | Methylmethacrylat |
| | 2-5 Gew.-% | Ethylacrylat |
| | 1-0,1 Gew.-% | Vernetzer |
| | | |
| Schale I | 79-82 Gew.-% | Butylacrylat |
| | 13-18 Gew.-% | Styrol oder α-Methylstyrol |
| | 0,1-1 Gew.-% | Vernetzer |
| | | |
| Schale II | 90-98 Gew.-% | Methylmethacrylat |
| | 10-2 Gew.-% | Ethylacrylat |

Als Vernetzer im Schlagzähmodifier (Kern oder Schale I) können beispielsweise Di(meth)acrylate oder Divinylbenzole oder Allyl(meth)acrylate eingesetzt werden. Auch Mischungen der Vemetzerkomponenten sind möglich.
Das Gewichtsverhältnis von Kern : Schale I : Schale II beträgt zwischen 20-30 : 30-50 : 20-40 Gew.-%. Schlagzähmodifier und ihre Herstellung beispielsweise in der EP 0 828 772 oder US 3,793,402 oder US 4,690,986 beschrieben.

Neben dem reinen Schlagzähmodifier in Pulverform kann der Schlagzähmodifier auch in Form eines Masterbatches eingesetzt werden.

Als Grundmasse für den Masterbatch kann eine handelsübliche PLEXIGLAS®-Formmasse verwendet werden, wie beispielsweise PLEXIGLAS®7H oder PLEXIGLAS®6N oder PLEXIGLAS®7N. Diese Formmassen werden von der Röhm GmbH & Co. KG in den Handel gebracht.

Als Grundmasse für den Masterbatch kann auch ein Granulat aus PLEXIGLAS®GS-Typen verwendet werden.

Die Herstellung des Masterbatches erfolgt nach einem üblichen Schmelzekoagulations-/Compoundierverfahren. Die Menge an Schlagzähmodifier im Masterbatch kann zwischen 10 und 50 Gew.-%, bezogen auf das Gesamtgewicht des Masterbatches, betragen.

### Beispiele

Es werden Platten mit den Abmessungen 2100 x 1290 x 4,0 mm nach dem üblichen Gussverfahren zwischen Glasplatten hergestellt.

Das Gussverfahren ist beispielsweise beschrieben im "Kunststoff-Handbuch", Bd. IX, S. 15, Carl Hanser Verlag (1975 oder in "Ullmanns Enzyclopädie der technischen Chemie", Bd. 19, S. 22, 4. Auflage, Verlag Chemie (198).

Als erfindungsgemäße Zusammensetzung wurde eine Mischung aus 80 Gew.-% MMA und 20 Gew.-% einer Schlagzähmodifiermischung mit folgender Zusammensetzung eingesetzt:

| | |
|---|---|
| 63,254 | Gew.-% PLEXIGLAS®Y7H |
| 36,746 | Gew.-% eines Schlagzähmodifiers mit einem Kern-Schale I-Schale II-Aufbau |

| | |
|---|---|
| Kern: | 23 % Gew.-%, bezogen auf den Schlagzähmodifier, Copolymere aus MMA und Vernetzer |
| | |
| Schale I: | 47 Gew.-% bezogen auf den Schlagzähmodifier, Copolymer aus Butylacrylat, Styrol und einem Vernetzer |
| | |
| Schale II: | 30 Gew.-%, bezogen auf den Schlagzähmodifier, Copolymer aus MMA, Styrol, Butylacrylat, Ethylacrylat und einem Vernetzer. |

Als Vergleich diente ein handelsübliches PLEXIGLAS®GS 233, hergestellt von der Röhm GmbH & Co. KG. Die Platte aus PLEXIGLAS® GS 233 hatte die gleichen Abmessungen wie die erfindungsgemäß hergestellte Platte.

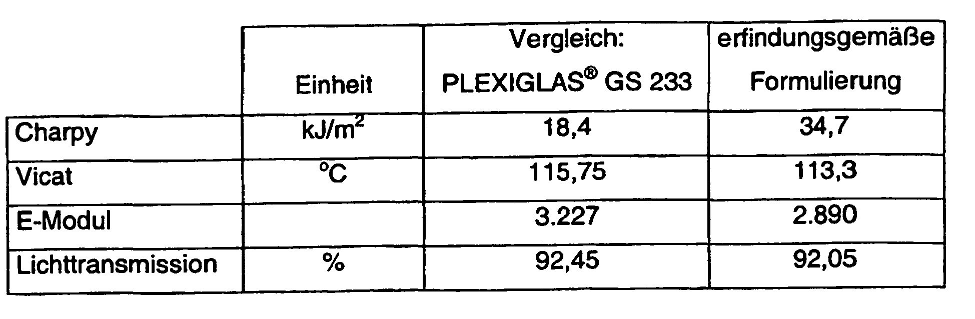

Die Charpy-Schlagzähigkeit wurde nach ISO 179/1fU bestimmt.

Das Gerät wird von der Firma Coesfeld hergestellt und vertrieben. Die Bestimmung der VICAT-Temperatur erfolgt nach DIN 306.

Das E-Modul wurde nach ISO 527 bestimmt.

Die Ergebnisse zeigen, dass es gelungen ist, ein schlagzähmodifiziertes Gussmaterial aus MMA und einpolymerisierten Schlagzähmodifier herzustellen, das neben der deutlich gesteigerten Schlagzähigkeit die üblichen positiven Eigenschaften eines PLEXIGLAS®GS-Materials aufweist. Die Platten waren farblos und ohne Trübung, sie zeigten weder Ablösungen von der Glasplatte noch Haftstellen an der Glasplatte.

Der erfindungsgemäße Formkörper eignet sich für alle Anwendungen, in denen bisher PLEXIGLAS®GS oder XT verwendet wurde. Darüber hinaus eignet er sich auf Grund der höheren Schlagzähigkeit besonders zur Anwendung bei Balkonverkleidungen (farblos, farbig, transparent oder gedeckt), als Solarliegenmaterial, für Lärmschutzwände an Verkehrswegen und für Werbeflächen.

## Patentansprüche

1. Kunststoffformkörper, erhältlich durch Polymerisation einer Mischung aus
| | |
|---|---|
| 65 - 99,5 Gew.-% | Methylmethacrylat |
| 0 - 3 Gew.-% | ungesättigte Carbonsäure |
| 0,5 - 35 Gew.-% | Schlagzähmodifier |
| 0 -1 Gew.-% | Vernetzer |
| 0,5 -1 Gew.-% | Stabilisator |
| 0,001 -0,1 Gew.-% | Initiator |
| 0,01 -1,0 Gew.-% | Trennmittel und |
| 0,001 - 0,031 Gew.-% | Regler |
im Gussverfahren.

2. Kunststoffformkörper nach Anspruch 1
**dadurch gekennzeichnet,**
**dass** der Schlagzähmodifier in Form eines Masterbatch aus PMMA und Schlagzähmodifier besteht.

3. Kunststoffformkörper nach Anspruch 2
**dadurch gekennzeichnet,**
**dass** der Masterbatch aus 10-50 Gew.-% eines Schlagzähmodifiers und 50 - 90 % eines PMMA besteht.

4. Verwendung des Kunststoffformkörpers nach den Ansprüchen 1 - 3 zur Herstellung von Lärmschutzwänden.

5. Verwendung des Kunststoffformkörpers nach den Ansprüchen 1 - 3 zur Herstellung von Balkonverkleidungen.

## Claims

1. Plastic moulding obtainable by polymerizing a mixture made from
| | |
|---|---|
| 65-99.5% by weight | of methyl methacrylate |
| 0-3% by weight | of an unsaturated carboxylic acid |
| 0.5-35% by weight | of an impact modifier |
| 0-1% by weight | of crosslinker |
| 0.5-1% by weight | of stabilizer |
| 0.001-0.1% by weight | of initiator |
| 0.01-1.0% by weight | of release agent and |
| 0.001-0.031% by weight | of regulator |
by a casting process.

2. Plastic moulding according to Claim 1,
**characterized in that**
the impact modifier, in the form of a masterbatch, is composed of PMMA and impact modifier.

3. Plastic moulding according to Claim 2,
**characterized in that**
the masterbatch is composed of 10-50% by weight of an impact modifier and 50-90% of a PMMA.

4. Use of the plastic moulding according to Claims 1-3 for producing noise barriers.

5. Use of the plastic moulding according to Claims 1-3 for producing balcony cladding.

## Revendications

1. Corps moulé en matière plastique, pouvant être obtenu par polymérisation d'un mélange constitué de
| | |
|---|---|
| 65 à 99,5 % en poids | de méthacrylate de méthyle |
| 0 à 3 % en poids | d'acide carboxylique insaturé |
| 0,5 à 35 % en poids | de modificateur de résistance au choc |
| 0 à 1 % en poids | de réticulant |
| 0,5 à 1 % en poids | de stabilisant |
| 0,001 à 0,1 % en poids | d'amorceur |
| 0,01 à 1,0 % en poids | d'agent de démoulage et |
| 0,001 à 0,031 % en poids | de régulateur |
| avec un procédé de coulée. | |

2. Corps moulé en matière plastique selon la revendication 1,
**caractérisé en ce que**
le modificateur de la résistance au choc est constitué d'un mélange maître composé de PMMA et de modificateur de résistance au choc.

3. Corps moulé en matière plastique selon la revendication 2,
**caractérisé en ce que**
le mélange maître est constitué de 10 à 50 % en poids d'un modificateur de résistance au choc et de 50 à 90 % d'un PMMA.

4. Utilisation du corps moulé en matière plastique selon les revendications 1 à 3, pour la fabrication de parois d'insonorisation.

5. Utilisation du corps moulé en matière plastique selon les revendications 1 à 3, pour la fabrication d'habillages de balcon.
